# FASCICULE DE BREVET EUROPEEN

(11) **EP 0 635 384 B1**
(45) Date de publication et mention de la délivrance du brevet: **10.12.1997**
(21) Numéro de dépôt: 94110342.6
(22) Date de dépôt: 04.07.1994
(51) Int. Cl.: B60C 17/06

(54) **Dispositif de soutien d'une bande de roulement de pneumatique**
Stützvorrichtung für eine Reifenlauffläche
Safety support for tyre tread

(30) Priorité: 19.07.1993 FR 9308932
(43) Date de publication de la demande: 25.01.1995
(73) Titulaire: COMPAGNIE GENERALE DES ETABLISSEMENTS MICHELIN - MICHELIN & CIE, 63040 Clermont-Ferrand Cédex (FR)
(72) Inventeur: Habay, Emmanuel, F-63000 Clermont-Ferrand (FR); Lambert, Guy-Noel, F-63100 Clermont-Ferrand (FR)
(74) Mandataire: Devaux, Edmond-Yves

(56) Documents cités:
- EP-A- 0 159 274
- DE-A- 1 480 805
- DE-A- 3 703 446
- GB-A- 2 084 088
- US-A- 4 393 911
- PATENT ABSTRACTS OF JAPAN vol. 8, no. 28 (M-274) 7 Février 1984 & JP-A-58 185 305 (SUMITOMO RUBBER IND. LTD.) 29 Octobre 1983

## Description

L'invention concerne un dispositif de soutien de bande de roulement de pneumatique, ledit dispositif étant utilisé dans le cas de roulage du pneumatique sous une pression de gonflage nulle ou de faible valeur. L'utilisation d'un tel dispositif dit aussi de sécurité et monté à l'intérieur du pneumatique, doit permettre au véhicule, équipé et chargé, de continuer à rouler malgré la perte partielle ou totale de pression de gonflage, la continuité du roulage se révélant bénéfique pour différentes raisons connues.

Les dispositifs de sécurité métalliques sont largement connus. Dans le cas d'utilisation de ces dispositifs en combinaison avec des pneumatiques destinés et aptes à rouler sur des sols variés, comportant en particulier cailloux, roches ou agglomérats divers, lesdits dispositifs résistent mal aux chocs et sont fragiles, leur rupture conduisant rapidement à la destruction complète du pneumatique.

Sont aussi connus des dispositifs de sécurité réalisés en matière élastique, caoutchouteuse, c'est-à-dire formés d'un mélange vulcanisé composé de caoutchouc, naturel ou synthétique, renforcé par les agents de renforcement connus en présence des adjuvants nécessaires. Pour porter une charge faible, par exemple dans le cas de pneumatiques équipant une voiture de tourisme, ces dispositifs sont bien appropriés. Par contre, dans le cas de pneumatiques supportant des charges élevées, la masse et les propriétés de dureté du mélange vulcanisé, nécessaires pour supporter la charge avec un affaissement raisonnable du pneumatique sont tels que le roulage de l'ensemble entraîne rapidement et prématurément un échauffement non compatible avec la tenue en endurance du pneumatique.

Le brevet Européen 0 130 136 décrit un dispositif de sécurité composé de deux matériaux distincts : la partie radialement intérieure ou support dudit dispositif, qui est rigide, est réalisée avec tout matériau rigide en particulier métallique ou plastique renforcé et la partie radialement extérieure ou chape, qui est non rigide, est formée de tout élastomère vulcanisé. Ces deux parties support et chape, sont reliées entre elles de façon solide et de sorte qu'elles soient rendues incapables de tout mouvement relatif entre elles.

Le dispositif décrit, est de même, rendu solidaire de la jante de montage, un lubrifiant étant employé pour lubrifier l'interface, dans le cas de roulage sous faible pression ou pression nulle, entre la face radialement extérieure de la chape et la face radialement intérieure du sommet du pneumatique. La hauteur de section du dispositif peut être comprise entre 25 et 55 % de la hauteur du pneumatique, vu en section méridienne. Quant à la hauteur de section du support, elle peut être comprise entre 20 % et 80 % de la hauteur du dispositif.

Les dispositifs de sécurité étant souvent utilisés sur des véhicules possédant un système de gonflage "centralisé", c'est-à-dire un système permettant le gonflage des pneumatiques en roulage, le lubrifiant, disposé sur la chape et qui se disperse sous l'effet du frottement et de la chaleur, peut aisément s'évacuer par les conduits de gonflage et les obstruer. Par ailleurs, la présence du lubrifiant n'annule pas le coefficient de frottement caoutchouc sur caoutchouc et le frottement est encore important.

Il est aussi connu qu'il est possible et préférable que le dispositif de sécurité puisse tourner autour de la jante afin de permettre la compensation de la différence de circonférence entre l'intérieur du sommet du pneumatique et la face radialement extérieure du dispositif. Tel est l'enseignement du brevet américain US 3 635 273 où les moyens décrits pour permettre la rotation du dispositif autour de la jante concernent l'interface entre la jante et ledit dispositif. Dans le cas d'effort transversal important subi par le pneumatique roulant sous faible pression ou sous pression nulle, ledit effort se transmet presque entièrement à l'interface jante-dispositif, c'est-à-dire au niveau desdits moyens, ce qui les fragilise ainsi que l'interface. Ils perdent alors rapidement leur efficacité.

Dans le document GB 2 084 088, le dispositif de sécurité comprend un support rigide, fixe par rapport à la jante, surmonté radialement à l'extérieur par une bande élastique de section rectangulaire mobile par rapport au support rigide et partiellement engagée dans une rainure circonférentielle réalisée sur la face externe dudit support ; les faces latérales de ce logement servent de butées aux déplacements axiaux de la bande. Ce dispositif présente l'inconvénient que les bords latéraux du support rigide peuvent venir en contact avec les parois du pneumatique.

Afin de remédier aux inconvénients décrits, tout en ayant un dispositif de sécurité formé de deux matériaux, le dispositif, conforme à l'invention, comprenant au moins un support rigide dont la partie radialement à l'extérieur forme une couronne d'appui et une chape élastique en mélange caoutchouteux vulcanisé dont l'épaisseur est au plus égale à 50 % de l'épaisseur ou hauteur totale du dispositif, ladite chape entourant la couronne d'appui et un produit lubrifiant étant disposé entre la couronne et la chape pour permettre le déplacement de la chape par rapport au support, est caractérisé en ce que
- la largeur axiale maximale de la chape élastique est supérieure à la largeur axiale maximale de la couronne d'appui, qui correspond à la largeur axiale maximale du support ;
- la forme de la face radialement extérieure de la couronne d'appui du support coopère avec des éléments de renforcement disposés dans la chape pour assurer le maintien radial et le guidage circonférentiel de ladite chape sur le support, le dispositif étant pourvu de moyens pour assurer son maintien sur la jante de montage du pneumatique, équipée dudit dispositif.

Le produit lubrifiant permettant le déplacement circonférentiel de la chape par rapport au support pourra se présenter sous une forme pâteuse ou solide.

Un lubrifiant sous forme pâteuse, tel que celui généralement employé pour permettre le montage de bourrelets de pneumatique sur des sièges de jante, sera avantageusement utilisé.

Préférentiellement les éléments de renforcement de la chape sont au moins une ou des tringles. Il est avantageux d'adjoindre à cette ou ces tringles une armature de renforcement formée d'une ou plusieurs nappes de fils ou câblés métalliques et/ou textiles, orientés par rapport à la direction circonférentielle du dispositif d'angles compris entre 0 et 90°.

De manière préférentielle et comme connu en soi, le support rigide du dispositif de sécurité est un support en trois parties courbes qui sont assemblées dans le pneumatique par leur faces méridiennes usinées.

Les arêtes radialement extérieures desdites faces seront de même avantageusement arrondies, afin d'éviter les blessures de la face interne de la chape non rigide, après rupture de la couche de lubrifiant.

Afin de permettre l'obtention de la flèche, du dispositif sous charge, la plus concordante possible avec la déformation du pneumatique, la bande de roulement de la chape est avantageusement munie d'au moins deux rainures circonférentielles, rectilignes ou en zigzag.

La base du support une fois assemblé peut être liée solidement à la jante de montage par tout moyen de fixation bien connu, ce moyen devant cependant laisser la possibilité d'un démontage ultérieur du support. De façon préférentielle, le support sera lié à la jante de manière élastique, au moyen d'une pièce annulaire ou anneau élastique en mélange caoutchouteux vulcanisé comprenant, vu en section méridienne, une base sensiblement rectangulaire surmontée radialement sur ses bords de deux nervures latérales destinées à assurer le contact avec les faces axialement intérieures des bourrelets du pneumatique.

Les caractéristiques et avantages de l'invention seront mieux comprises à l'aide de la description qui suit et qui se réfère au dessin illustrant à titre non limitatif des exemples d'exécution et sur lequel :
- la figure 1 représente, vue en section méridienne et schématiquement une première variante du dispositif, conforme à l'invention ;
- la figure 2 représente en section méridienne une deuxième variante du dispositif conforme à l'invention.

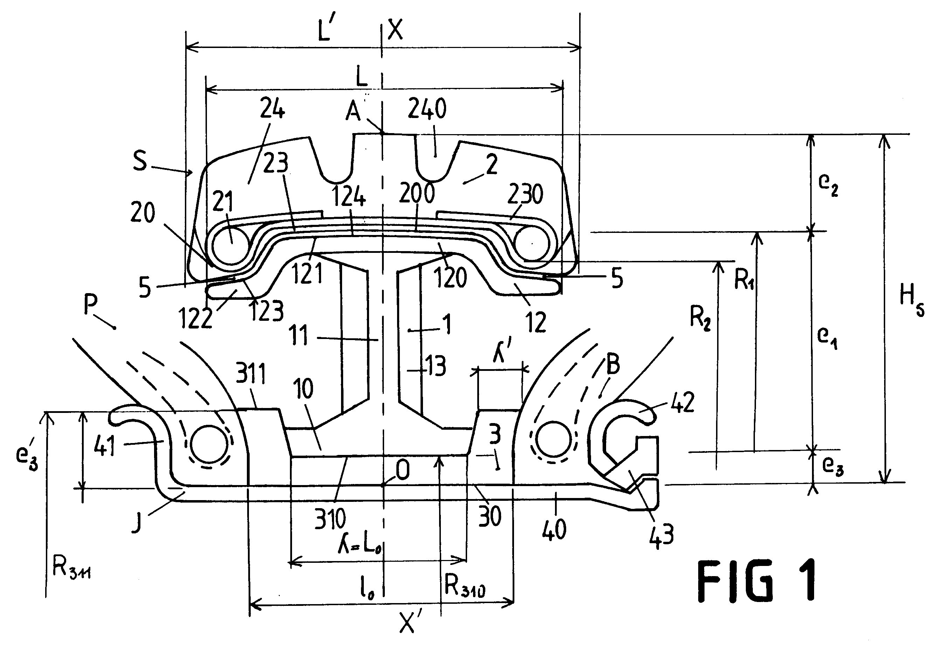

Le dispositif de sécurité S, montré sur la figure 1 et destiné à être monté à l'intérieur du pneumatique P de dimension 14-00 20 X, est composé de trois parties : un support rigide métallique (1), une chape élastique non rigide (2) destinée à entrer en contact avec la face intérieure du sommet du pneumatique, et une pièce annulaire de liaison (3) avec la jante J sur laquelle est monté le pneumatique P. Ladite jante J est une jante démontable usuelle, c'est-à-dire formée d'au moins trois pièces, qui sont le fond de jante (40), plat et réuni à un rebord de jante (41) fixe, le deuxième rebord de jante (42) mobile et l'anneau de verrouillage (43).

Le support rigide (1) est un support en alliage d'aluminium. Il est formé, vu en section méridienne, d'une base (10) surmontée radialement d'un disque (11), lui-même surmonté de la couronne d'appui (12), destinée à recevoir sur sa face radialement extérieure la couche du lubrifiant (5) de la chape (2).

Cette couronne d'appui (12) a une forme transversale semblable à la forme d'une jante, mais inversée, c'est-à-dire avec un fond de couronne (120) plus éloigné de l'axe de rotation du dispositif que les sommets des rebords de couronne (122). Le fond de couronne (120) a une face radialement extérieure (121) légèrement convexe, c est-à-dire dont le centre de courbure est situé sur la trace XX' du plan équatorial du dispositif et radialement à l'intérieur. Quant aux rebords (122), leurs faces radialement extérieures (123) sont pratiquement rectilignes et parallèles à l'axe de rotation. La distance, séparant le point de la face radialement extérieure (121) du fond (120) le plus éloigné de l'axe de rotation de la droite joignant les faces radialement extérieures (123) des rebords (122), est égale à 22 mm, et généralement au moins égale à 0,25 fois l'épaisseur e₂ de la chape (2). L'épaisseur e₂ de la chape (2) est définie comme étant la différence des rayons de deux cylindres d'axes confondus avec l'axe de la jante J et dont l'un a pour génératrice une droite fictive passant par le point de la couronne d'appui (12) la plus à l'extérieur radialement et l'autre a pour génératrice une droite passant par le point de la chape (2) le plus éloigné de l'axe de rotation.

Circonférentiellement le support (1) est formé de trois parties courbes qui sont assemblées par les faces méridiennes des ailes (13) qui renforcent le disque (11). Ces ailes (13) sont, dans le cas décrit, percées d'orifices (non montrés) de manière à recevoir les moyens de fixation appropriés. Ces faces méridiennes sont plus larges axialement que le disque (11) mais moins larges que la couronne d'appui (12) et que la base (10) du support (1).

Radialement à l'extérieur du support rigide (1) sur la face extérieure de la couronne d'appui (12) recouverte d'une couche de lubrifiant (5) pâteux, est disposée la chape non rigide et élastique (2).

Cette chape (2) est sous forme d'anneau circulaire fermée, et vue en section méridienne, elle a une face radialement intérieure (200) qui épouse géométriquement le profil méridien de la face radialement extérieure (124) de la couronne d'appui (12) mais est constamment distante de ladite face (124) d'une quantité égale à 1 mm, de manière à ménager un maximum d'efficacité du lubrifiant (5). La chape (2) comprend, radialement à l'intérieur, une couche (20) de mélange vulcanisé présentant avec l'aluminium un coefficient de frottement faible tout en ayant une grande résistance mécanique, afin de pouvoir résister aux imperfections de surface du support (1), et aux corps étrangers pouvant éventuellement s'insérer entre ledit support (1) et la chape (2). Si on appelle L la largeur axiale maximale de la couronne d'appui (12) du support (1), la largeur axiale maximale L' de la chape (2) est située au niveau de la base de ladite chape et sa valeur est supérieure à L, afin d'éviter les contacts possibles entre pneumatique et support (1). Dans l'exemple décrit, L' est égale à 170 mm, alors que L est égale à 150 mm.

Symétriquement par rapport au plan équatorial XX' du dispositif, est disposée dans chaque bord inférieur de la chape (2) une tringle (21) dont le rayon intérieur R₂ est inférieur au rayon extérieur maximal R₁ de la couronne d'appui (12) du support (1). Les tringles (21), enrobées de mélange caoutchouteux, sont les tringles d'ancrage d'une armature de renforcement (23), cette armature étant retournée vers l'extérieur sur lesdites tringles (21) pour former des retournements (230).

Les tringles (21) sont des tringles de type "tressé" mais sans âme centrale, ce qui permet une bonne résistance aux efforts de tension tout en permettant une ovalisation suffisante pour l'introduction aisée de la chape (2), ainsi renforcée, dans le pneumatique P.

L'armature de renforcement (23) est formée d'une seule nappe de câblés métalliques en acier Cette armature est surmontée radialement à l'extérieur d'une bande de roulement (24) de mélange caoutchouteux vulcanisé, ayant la particularité d'avoir des pertes hystérétiques faibles, afin de minimiser la génération d'échauffement.

Cette bande de roulement (24) est pourvue de rainures circonférentielles (240), au nombre de deux dans l'exemple décrit, rainures qui, en combinaison avec la convexité de la face radialement extérieure de la bande de roulement (24) permet à cette dernière de se déformer et d'épouser le profil méridien de l'intérieur du sommet du pneumatique P roulant à pression faible ou nulle.

Quant à la pièce annulaire (3), massive, en matière caoutchouteuse, elle possède une face radialement intérieure (30), vue en section méridienne et non montée sur jante, plane et qui a une largeur l légèrement supérieure à la largeur axiale lo théorique qui sépare les faces axialement intérieures des deux bourrelets (B), mesurée au niveau de la jante J, cette caractéristique permettant lors de la mise en place du dispositif sur jante J avec le pneumatique P une légère compression dans le sens axial. Quant à la face radialement extérieure de l'anneau (3), elle comporte une partie centrale (310) de largeur axiale λ égale à la largeur axiale de la base Lo du support (1) et de rayon R₃₁₀ tel que l'épaisseur centrale e₃ de l'anneau (3), mesurée dans le plan équatorial, soit égale à 23 mm, et de part et d'autre, deux parties latérales (311), chacune de largeur axiale λ' égale à 0,2 λ et de rayon R₃₁₁ tel que l'épaisseur e'₃ des parties latérales (311) de l'anneau (3) soit supérieure à l'épaisseur e₃ de 10 mm. Les faces latérales de l'anneau (3) ont des profils méridiens tels que ces faces puissent s'appliquer régulièrement sur les faces intérieures des bourrelets du pneumatique P.

Si l'on appelle H la hauteur du pneumatique mesurée dans le plan équatorial de l'ensemble qui est le plan XX', le dispositif de sécurité S étant disposé symétriquement par rapport audit plan, elle est égale à 374 mm pour le pneumatique P considéré. La hauteur Hₛ globale du dispositif S, mesuré dans le plan équatorial entre le point A de la bande de roulement (24) le plus éloigné de l'axe de rotation et le point O de la face (30) de l'anneau (3), est égale à 188 mm, c'est-à-dire pratiquement égale à 0,5 H dans l'exemple décrit, Hₛ étant généralement comprise entre 0,5 H et 0,6 H.

Cette hauteur Hₛ comprend l'épaisseur e₃ de l'anneau (3) égale à 23 mm et donc à 0,12 Hₛ, ce qui correspond à une valeur au plus égale à 0,2 Hₛ, l'épaisseur e₁ du support (1), toujours mesurée dans le plan équatorial XX', égale à 0,67 Hₛ et donc comprise entre 0,4 Hₛ et 0,8 Hₛ et l'épaisseur e₂ de la chape (2), égale dans l'exemple décrit à 0,21 Hₛ et donc au plus égale à 0,5 Hₛ et préférentiellement comprise entre 0,2 Hₛ et 0,5 Hₛ.

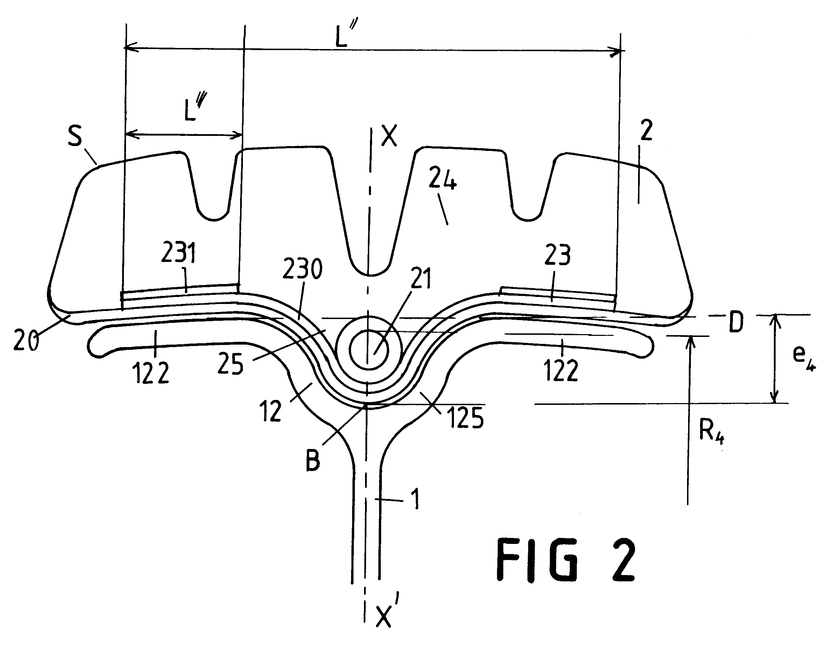

La variante du dispositif de sécurité S montrée sur la figure 2 pour laquelle les mêmes références sont choisies, diffère de l'exemple décrit ci-avant par les moyens de maintien radial et transversal de la chape (2) sur le support rigide (1). La couronne d'appui (12) du support (1) présente en son centre une gorge (125) comprise axialement entre les deux rebords (122) de la couronne d'appui (12). Cette gorge (125) est destinée à recevoir la nervure (25) centrale et circulaire de la chape élastique (2), nervure qui est renforcée par une tringle unique (21), de même type et structure que les tringles (21) utilisées dans le dispositif S représenté sur la figure 1. La gorge (125) a une profondeur e₄, mesurée dans le plan équatorial XX', entre son point B le plus rapproché de l'axe de rotation et la droite fictive D joignant les points des rebords (122) les plus éloignés de l'axe de rotation, telle que le rayon extérieur R₄ de la tringle (21) de renforcement de la nervure soit inférieur à la distance radiale séparant la droite fictive D de l'axe de rotation, et la distance e₄ étant au moins égale à 0,25 fois l'épaisseur e₂ de la chape (2). La chape (2) de la figure 3 comprend aussi, dans sa partie radialement inférieure une couche de mélange vulcanisé (20) identique à celle de la chape (2) de la figure 1, une armature de renforcement (23) composée d'une nappe (230) de câbles métalliques radiaux en acier, cette nappe (230) ayant une largeur L'' sensiblement égale à la largeur L de la couronne d'appui (12) du support (1) et passant radialement sous la tringle (21) de renforcement, et, situées de part et d'autre du plan équatorial XX', de deux nappes étroites (231) formées, chacune de câbles métalliques faisant avec la direction circonférentielle un angle compris entre 0° et 5°, la largeur axiale de chacune des nappes (L''') étant égale à 0,25 fois la largeur axiale L'' de la nappe (230). Une bande de roulement (24), munie de rainures circonférentielles, complète la chape (2), possédant une forme extérieure identique à la forme de la chape (2) de la figure 1 en particulier avec des bords latéraux dépassant axialement les extrémités de la couronne d'appui (12).

Le montage d'un ensemble pneumatique-jante et dispositif tel que décrit ci-dessus ne présente aucune difficulté. la chape élastique (2) est introduite dans le pneumatique P, le support (1) est assemblé à l'intérieur de la chape (2),alors que la pièce annulaire (3) fendue selon une génératrice est posée à l'intérieur du support (1) assemblé et l'ensemble pneumatique plus dispositif de sécurité est monté sur la jante J.

## Revendications

1. Dispositif de soutien S de la bande de roulement d'un pneumatique P, comprenant au moins un support rigide (1) dont la partie radialement à l'extérieur forme une couronne d'appui (12), de largeur axiale maximale L, et une chape élastique (2) en mélange caoutchouteux vulcanisé dont l'épaisseur e₂ est au plus égale à 50 % de la hauteur totale H₂ du dispositif et de largeur axiale maximale L', ladite chape (2) entourant la couronne d'appui (12) et un produit lubrifiant étant disposé entre la couronne (12) et la chape (2) pour permettre le déplacement circonférentiel de la chape (2) par rapport à la couronne (12), caractérisé en ce que
- la largeur axiale maximale L' de la chape élastique (2) est supérieure à la largeur axiale maximale L de la couronne (12) du support (1),
- la forme de la face radialement extérieure (121, 123) de la couronne d'appui (12) du support 1, coopère avec des éléments de renforcement (21, 23) disposés dans la chape élastique (2) pour assurer le maintien radial et le guidage circonférentiel de ladite chape (2) sur le support (1), et le dispositif S étant pourvu de moyens (3) pour assurer son maintien sur la jante de montage J du pneumatique P équipé dudit dispositif S.

2. Dispositif selon la revendication 1 caractérisé en ce que la couronne d'appui (12) du support (1) comprend un fond de couronne (120) et axialement de part et d'autre deux rebords de couronne (122) la face radialement extérieure (121) dudit fond de couronne (120) étant plus éloignée de l'axe de rotation du dispositif S que les faces radialement extérieures (123) des rebords (122).

3. Dispositif selon la revendication 2, caractérisé en ce que la distance radiale séparant la face radialement extérieure (121) du fond (120) et les faces (123) des rebords (122) est au moins égale à 0,25 fois l'épaisseur e₂ de la chape (2)

4. Dispositif selon la revendication 3, caractérisé en ce que les éléments de renforcement de la chape (2) élastique comportent radialement à l'intérieur dans chacun des bords de la chape une tringle (21) de type tressé et enrobée d'un mélange de caoutchouc, ladite tringle étant destinée à être disposée axialement sur la face extérieure (123) du rebord (122), et le rayon intérieur R₂ de ladite tringle (21) étant inférieur au rayon extérieur maximal R₁ de la couronne d'appui (12) du support (1).

5. Dispositif selon la revendication 4 caractérisé en ce que la chape (2) comprend en outre une armature de renforcement (23) de câbles métalliques en acier, retournée autour des tringles (21) pour former des retournements (230).

6. Dispositif selon la revendication 5, caractérisé en ce que la chape (2) comprend une bande de roulement (24) pourvue d'au moins deux rainures circonférentielles (240).

7. Dispositif selon la revendication 1, caractérisé en ce que la couronne d'appui (12) du support (1) présente en son centre une gorge (125), comprise axialement entre deux rebords (122), la distance radiale e₄ entre le fond B de la gorge (125) et la droite fictive D reliant les points des faces radialement extérieures (123) des rebords (122) étant au moins égale à 0,25 fois l'épaisseur e₂ de la chape (2).

8. Dispositif selon la revendication 7, caractérisé en ce que la chape (2) est munie sur sa face intérieure d'une nervure centrale et circonférentielle (25), renforcée par une tringle unique (21) dont le rayon extérieur R₄ est inférieur à la distance radiale séparant la droite D de l'axe de rotation dudit dispositif.

9. Dispositif selon la revendication 8, caractérisé en ce que la chape (2) comprend en outre une armature de renforcement (23), composée d'au moins une nappe de fils ou câbles (230) de largeur L'' sensiblement égale à la largeur L de la couronne d'appui (12), et passant radialement sous la tringle (21).

10. Dispositif selon la revendication 9, caractérisé en ce que l'armature de renforcement (23) comprend aussi deux nappes étroites (231) de fils ou câbles orientés circonférentiellement, disposées symétriquement de part et d'autre du plan équatorial du dispositif

11. Dispositif selon l'une des revendications 1 à 10, caractérisé en ce que les moyens (3) pour assurer le maintien sur la jante J de montage du pneumatique, équipé dudit dispositif, sont constitués par un anneau élastique (3) fendu méridiennement et comprenant, vu en section méridienne, une base sensiblement rectangulaire surmontée sur ses bords de deux nervures latérales.

## Claims

1. A support device S for the tread of a tyre P, comprising at least one rigid support (1), the radially outer portion of which forms a bearing ring (12), of maximum axial width L, and an elastic cap (2) of vulcanised rubber mix, the thickness e₂ of which is at most equal to 50% of the total height H₂ of the device and of maximum axial width L', said cap (2) surrounding the bearing ring (12), and a lubricant product being disposed between the ring (12) and the cap (2) to permit the circumferential displacement of the cap (2) relative to the ring (12), characterised in that
- the maximum axial width L' of the elastic cap (2) is greater than the maximum axial width L of the ring (12) of the support (1);
- the shape of the radially outer face (121, 123) of the bearing ring (12) of the support (1) cooperates with reinforcement elements (21, 23) arranged in the elastic cap (2) in order to ensure the radial holding and circumferential guiding of said cap (2) on the support (1), and the device S being provided with means (3) for ensuring the holding thereof on the mounting rim J of the tyre P equipped with said device S.

2. A device according to Claim 1, characterised in that the bearing ring (12) of the support (1) comprises a ring base (120) and, axially on opposite sides, two ring shoulders (122), the radially outer face (121) of said ring base (120) being further from the axis of rotation of the device S than the radially outer faces (123) of the shoulders (122).

3. A device according to Claim 2, characterised in that the radial distance between the radially outer face (121) of the base (120) and the faces (123) of the shoulders (122) is at least equal to 0.25 times the thickness e₂ of the cap (2).

4. A device according to Claim 3, characterised in that the reinforcement elements of the elastic cap (2) include, radially on the inside of each of the edges of the cap, a bead wire (21) of braided type coated with a rubber mix, said bead wire being intended to be arranged axially on the outer face (123) of the shoulder (122), and the inner radius R₂ of said bead wire (21) is less than the maximum outer radius R₁ of the bearing ring (12) of the support (1).

5. A device according to Claim 4, characterised in that the cap (2) furthermore includes a reinforcement armature (23) of metal cables of steel, turned up around the bead wires (21) to form turn-ups (230).

6. A device according to Claim 5, characterised in that the cap (2) comprises a tread (24) provided with at least two circumferential grooves (240).

7. A device according to Claim 1, characterised in that the bearing ring (12) of the support (1) has at its centre a groove (125) located axially between two shoulders (122), the radial distance e₄ between the bottom B of the groove (125) and the imaginary straight line D connecting the points of the radially outer faces (123) of the shoulders (122) being at least equal to 0.25 times the thickness e₂ of the cap (2).

8. A device according to Claim 7, characterised in that the cap (2) is provided on its inner face with a circumferential central rib (25), reinforced by a single bead wire (21), the outer radius R₄ of which is less than the radial distance between the straight line D and the axis of rotation of said device.

9. A device according to Claim 8, characterised in that the cap (2) furthermore includes a reinforcement armature (23) composed of at least one ply of cords or cables (230) of a width L'' substantially equal to the width L of the bearing ring (12), and passing radially below the bead wire (21).

10. A device according to Claim 9, characterised in that the reinforcement armature (23) also comprises two narrow plies (231) of circumferentially oriented cords or cables arranged symmetrically on both sides of the equatorial plane of the device.

11. A device according to one of Claims 1 to 10, characterised in that the means (3) for ensuring the holding on the mounting rim J of the tyre, equipped with said device, consist of a meridianly split elastic ring (3) comprising, seen in meridian section, a substantially rectangular base surmounted on its edges by two lateral ribs.

## Patentansprüche

1. Stützvorrichtung S für die Lauffläche eines Reifens P, mit mindestens einem starren Träger (1), dessen radial aussenliegender Teil einen Auflagekranz (12) mit einer maximalen axialen Breite L bildet, sowie einem elastischen Laufteil (2) aus vulkanisierter, gummiartiger Mischung, dessen Dicke e₂ höchstens gleich 50% der Gesamthöhe H₂ der Vorrichtung beträgt, und mit einer axialen, maximalen Breite L', wobei das Laufteil (2) den Auflagekranz (12) umgibt und ein Schmiermittel zwischen dem Auflagekranz (12) und dem Laufteil (2) angeordnet ist, um die Verlagerung des Laufteils (2) in Umfangsrichtung in Bezug auf den Auflagekranz (12) zu gestatten, dadurch gekennzeichnet, daß
- die axiale, maximale Breite L' des elastischen Laufteils (2) größer ist als die axiale, maximale Breite L des Kranzes (12) des Trägers (1), und
- die Form der radial außenliegenden Fläche (121, 123) des Auflagekranzes (12) des Trägers 1 mit Verstärkungselementen (21, 23) zusammenwirkt, die im elastischen Laufteil (2) angeordnet sind, um den radialen Sitz des genannten Laufteils (2) und dessen Führung auf dem Träger (1) sicherzustellen, und die Vorrichtung S mit Mitteln (3) versehen ist, um ihre Halterung auf der Montagefelge J des Reifens P sicherzustellen, der mit der genannten Vorrichtung S ausgestattet ist.

2. Vorrichtung nach Anspruch 1, dadurch gekennzeichnet, daß der Auflagekranz (12) des Trägers (1) einen Kranzboden (120) und axial beiderseits zwei Kranzränder (122) aufweist, wobei die radial äußere Fläche (121) des genannten Kranzbodens (120) von der Drehachse der Vorrichtung S weiter entfernt ist als die radial außenliegenden Flächen (123) der Ränder (122).

3. Vorrichtung nach Anspruch 2, dadurch gekennzeichnet, daß der radiale Abstand, der die radial außenliegende Fläche (121) des Bodens (120) und die Flächen (123) der Ränder (122) trennt, mindestens gleich dem 0,25-fachen der Dicke e₂ des Laufteils (2) ist.

4. Vorrichtung nach Anspruch 3, ddaurch gekennzeichnet, daß die Verstärkungselemente des elastischen Laufteils (2) radial auf der Innenseite in jedem der Ränder des Laufteils eine Stange bzw. einen Kern (21) aufweisen, der der Art nach geflochten ist und mit einer Gummimischung umhüllt ist, wobei der genannte Kern dazu bestimmt ist, axial auf der Außenfläche (123) des Randes (122) angeordnet zu werden, und daß der innere Radius R₂ des genannten Kerns (21) kleiner ist als der maximale äußere Radius R₁ des Auflagekranzes (12) des Trägers (1).

5. Vorrichtung nach Anspruch 4, dadurch gekennzeichnet, daß das Laufteil (2) außerdem eine Verstärkungsbewehrung (23) aus Metallseilen aus Stahl aufweist, die rund um die Kerne (21) herumgeschlagen sind, um Umschläge (230) zu bilden.

6. Vorrichtung nach Anspruch 5, dadurch gekennzeichnet, daß das Laufteil (2) eine Lauffläche (24) aufweist, die mit mindestens zwei Umfangsnuten (240) versehen ist.

7. Vorrichtung nach Anspruch 1, dadurch gekennzeichnet, daß der Auflagekranz (12) des Trägers (1) in seiner Mitte eine Nut (125) aufweist, die axial zwischen zwei Rändern (122) liegt, wobei der radiale Abstand e₄ zwischen dem Boden B der Nut (125) und einer gedachten Geraden D, die die radial äußersten Punkte (123) der Ränder (122) verbindet, mindestens gleich dem 0,25-fachen der Dicke e₂ des Laufteils (2) ist.

8. Vorrichtung nach Anspruch 7, dadurch gekennzeichnet, daß das Laufteil (2) auf seiner Innenfläche mit einer mittigen und sich in Umfangsrichtung erstreckenden Rippe (25) versehen ist, die mit einer einzigen Stange bzw. einem einzigen Kern (21) verstärkt ist, dessen äußerster Radius R₄ kleiner ist als der radiale Abstand, der die Gerade D von der Drehachse der genannten Vorrichtung trennt.

9. Vorrichtung nach Anspruch 8, dadurch gekennzeichnet, daß das Laufteil (2) außerdem eine Verstärkungsbewehrung (23) aufweist, die aus mindestens einem Mantel aus Drähten oder Seilen (230) mit der Breite L'' zusammengesetzt ist, die im wesentlichen gleich ist der Breite L des Auflagekranzes (12), und radial unter dem Kern (21) hindurchläuft.

10. Vorrichtung nach Anspruch 9, dadurch gekennzeichnet, daß die Verstärkungsbewehrung (23) außerdem zwei gerade Mäntel (231) aus Drähten oder Seilen aufweist, die in Umfangsrichtung ausgerichtet und symmetrisch beiderseits der Äquatorialebene der Vorrichtung angeordnet sind.

11. Vorrichtung nach einem der Ansprüche 1 bis 10, dadurch gekennzeichnet, daß die Mittel (3) zum Sicherstellen der Halterung auf der Montagefelge J des Reifens, der mit der genanten Vorrichtung ausgestattet ist, von einem elastischen Ring (3) gebildet sind, der in Meridianrichtung geschlitzt ist und, im Meridianschnitt gesehen, eine im wesentlichen rechteckige Basis aufweist, über der an ihren Enden zwei seitliche Rippen angeordnet sind.
